# EUROPÄISCHE PATENTANMELDUNG

(11) **EP 4 621 271 A1**
(43) Veröffentlichungstag der Anmeldung: **24.09.2025**
(21) Anmeldenummer: 25164629.5
(22) Anmeldetag: 19.03.2025
(51) Int. Cl.: F16K 5/06, F16K 31/04

(54) **ADAPTER ZUM ANSCHLIESSEN EINES ANTRIEBSMITTELS AN EINEN MANUELL BETÄTIGBAREN ABSPERRHAHN UND SYSTEM AUS EINEM SOLCHEN ADAPTER UND EINEM MANUELL BETÄTIGBAREN ABSPERRHAHN**

(30) Priorität: 20.03.2024 DE 102024107975
(71) Anmelder: Viega Technology GmbH & Co. KG, 57439 Attendorn (DE)
(72) Erfinder: Effertz, Daniel, 57439 Attendorn (DE)
(74) Vertreter: Cohausz & Florack

(57) **Zusammenfassung**

Die Erfindung betrifft einen Adapter zum Anschließen eines Antriebsmittels an einen manuell betätigbaren Absperrhahn, insbesondere einen Kugelhahn, mit einem Flansch (6), mit einem am Flansch (6) ausgebildeten Befestigungsabschnitt (8) zum Befestigen des Antriebsmittels und mit Vierkantadapter (12) zum Übertragen eines Drehmomentes von dem Antriebsmittel auf die Schaltwelle des Absperrhahns, der dadurch gekennzeichnet ist, dass der Flansch (6) einen Flanschring (16) und einen im Flanschring (16) angeordneten Einsatz (18) aufweist, wobei der Flanschring (16) und der Einsatz (18) entlang der Achse der Schaltwelle angeordnet sind, dass der Einsatz (18) eine Innenöffnung mit einem an eine Außenabmessung des Absperrhahns angepassten Innenquerschnitt aufweist, dass der Einsatz (18) als in azimutaler Richtung offener und radial zusammendrückbarer Ring ausgebildet ist, dass der Flanschring (16) und der Einsatz (18) zueinander korrespondierende konische Anlageflächen aufweisen und dass Schraubmittel (26) zum Verspannen des Flanschringes (16) und des Einsatzes (18) in axialer Richtung zueinander zur Reduzierung des Innendurchmessers der Innenöffnung vorgesehen sind. Damit wird die Aufgabe gelöst, einen Adapter sowie ein System der eingangs genannten Art anzugeben, der bzw. das bereits bestehende Installationen erweitert, und insbesondere einfach zu positionieren und montieren ist.

## Beschreibung

Die Erfindung betrifft einen Adapter zum Anschließen eines Antriebsmittels an einen manuell betätigbaren Absperrhahn, insbesondere einen Kugelhahn. Des Weiteren betrifft die Erfindung ein System aus einem solchen Adapter und einem manuell betätigbaren Absperrhahn.

Aus dem Stand der Technik sind Absperrhähne mit einer manuell oder einer automatisch betätigbaren Schaltung zum Sperren oder Freigeben des Durchflusses von Fluiden in einer Rohrleitung bekannt.

Manuell betätigbare Absperrhähne sind in Rohrleitungen in der Regel mittels beidseitig verbundenen Fittings mit weiteren Rohrleitungen verbunden und weisen einen auf eine Steuerwelle montierten Handhebel zum Freigeben und Sperren des Durchflusses auf. Die Position des Handhebels zur Freigabe oder Sperrung des Durchflusses ist oft durch im oder am Gehäuse integrierte Anschlagnocken bestimmt, deren Anordnung den genannten Positionen entspricht. Zur Freigabe oder Sperrung des Durchflusses wird der Handhebel zwischen den Anschlagnocken hin- und herbewegt. Zumeist lassen sich manuell betätigbare Absperrhähne in die Positionen Freigabe und Sperrung bringen, wobei auch Zwischenstellungen, das heißt Positionen des Handhebels zwischen den Anschlagnocken, möglich sind. Meistens ist ein genaues Einstellen des Durchflusses dabei nur in den Positionen Freigabe und Sperrung des Absperrhahns erreichbar, da aufgrund der Schaltung mit einem Handhebel eine feinere Regelung des Durchflusses oft nicht in genauer und reproduzierbarer Weise realisierbar ist. In der Regel unterscheiden sich die Positionen Freigabe und Sperren um 90° Drehwinkel voneinander.

Weit verbreitet ist die Anwendung von Kugelhähnen, bei denen in einem Gehäuse eine mit einer Bohrung versehene Kugel abdichtend angeordnet ist, die mittels des Handhebels und der damit verbundenen Schaltwelle gedreht werden kann. Die Bohrung in der Kugel ermöglicht dann einen Durchfluss, wenn sie strömungstechnisch mit der Zu- und Ableitung verbunden ist. Maximal ist der Durchfluss, wenn die Achse der Bohrung mit der Durchflussrichtung der Zu- und Ableitung übereinstimmt. Ist dagegen die Kugel um 90° gegenüber dieser Position ausgerichtet, so ist der Durchfluss gesperrt.

Automatisch betätigbare Absperrhähne bedienen sich bei der Schaltung zwischen Sperrung und Freigabe der Durchströmung eines regelbaren Antriebsmittels, das die Steuerwelle des Absperrhahns antreibt. Zur Gewährleistung einer sicheren Montage des Stellantriebs an den Absperrhahn werden diese Absperrhähne bereits in integrierter Bauform mit einem Anschlussflansch oder einer Anschlussstelle für einen Stellantrieb mit Flansch nach Norm DIN ISO 5211 ausgeführt. Der Anschlussflansch oder die Anschlussstelle für einen Flansch zur Montage eines Antriebs ist dabei konstruktiv im Gehäuse des Absperrhahns vorgesehen und bereits verbaut bzw. einstückig damit ausgebildet. Demnach besitzt das Gehäuse eines automatisch betätigbaren Absperrhahns bereits eine Schnittstelle für den regelbaren Stellantrieb.

Im Zuge der Modernisierung von Gebäuden soll in der Regel deren Automatisierungsgrad gesteigert werden. Oft müssen dabei auch Rohrleitungsinstallationen automatisiert werden und demgemäß mit einem regelbaren Antrieb ausgerüstet werden. Derzeit bedeutet dies, dass die in bestehenden Systemen verbauten manuell betätigbaren Absperrhähne einer Rohrleitungsinstallation durch automatisch betätigbare Absperrhähne, das heißt bereits als integriertes Bauteil ausgelegte Absperrhähne, ersetzt werden. Diese Maßnahme ist erforderlich, unabhängig davon, wie modern die Installation ist. Bei einer derartigen Modernisierung der Installation von Rohrleitungssystemen ist eine komplette Neuanschaffung der automatisch betätigbaren Absperrhähne unumgänglich und mit einem erhöhten Kostenaufwand verbunden.

Davon ausgehend liegt der Erfindung die Aufgabe zugrunde, einen Adapter sowie ein System der eingangs genannten Art anzugeben, der bzw. das bereits bestehende Installationen erweitert, und insbesondere einfach zu positionieren und montieren ist.

Die zuvor aufgezeigte Aufgabe wird erfindungsgemäß durch einen eingangs genannten Adapter zum Anschließen eines Antriebsmittels an einen manuell betätigbaren Absperrhahn, insbesondere einen Kugelhahn, gelöst mit einem Flansch, mit einem am Flansch ausgebildeten Befestigungsabschnitt zum Befestigen des Antriebsmittels und mit Vierkantadapter zum Übertragen eines Drehmomentes von dem Antriebsmittel auf die Schaltwelle des Absperrhahns, wobei der Flansch einen Flanschring und einen im Flanschring angeordneten Einsatz aufweist, wobei der Einsatz eine Innenöffnung mit einem an eine Außenabmessung des Absperrhahns angepassten Innenquerschnitt aufweist, wobei der Einsatz als in azimutaler Richtung offener und radial zusammendrückbarer Ring ausgebildet ist, wobei der Flanschring und der Einsatz zueinander korrespondierende konische Anlageflächen aufweisen und wobei Schraubmittel zum Verspannen des Flanschringes und des Einsatzes in axialer Richtung zueinander zur Reduzierung des Innendurchmessers der Innenöffnung vorgesehen sind.

In bevorzugter Weise sind der Flanschring und der Einsatz im montierten Zustand entlang der Achse der Schaltwelle des Absperrhahns angeordnet. Bevorzugt kommt als Absperrhahn ein eingangs erläuterter Kugelhahn zur Anwendung. Auf diese Beschreibung wird hier Bezug genommen.

Bei der Montage des Adapters werden die Schraubmittel angezogen und aufgrund der konischen Anlageflächen zwischen dem Flanschring und dem Einsatz wird der Innendurchmesser des Einsatzes verkleinert. Denn der Einsatz weist eine offene Ringform, die auch als C-Form bezeichnet werden kann, auf und kann daher in azimutaler Richtung zusammengedrückt und auf einen kleineren Durchmesser gebracht werden.

Dadurch kommt der Einsatz mit seiner Innenseite mit der Außenkontur des Absperrhahns in Berührung und wird durch weiteres Anziehen der Schraubmittel gegen eine Bewegung relativ zum Absperrhahn gesichert. Denn die entstehende Haftreibung zwischen dem Einsatz und der Außenkontur des Absperrhahns reicht aus, um die Position des Einsatzes und somit auch des Flanschrings gegenüber dem Absperrhahn zu sichern.

Somit kann über den Flansch ein Drehmoment eines mit dem Flansch befestigten Antriebsmittels wie eines Elektromotors mittels des Vierkantadapters auf die Schaltwelle des Absperrhahns übertragen werden.

Dabei kann der am Flansch ausgebildete Befestigungsabschnitt mittels Befestigungsmitteln wie Bohrungen mit oder ohne Gewinde an durch die oben genannte Norm DIN ISO 5211 angepasst sein, so dass genormte Antriebsmittel bei nur für einen Handbetrieb ausgebildeten Absperrhähnen eingesetzt werden können, ohne dass die Absperrhähne ausgewechselt werden müssen.

Der beschriebene Flansch ermöglicht also eine sichere und spielfreie Montage eines ISO-Flansches als Nachrüstlösung für bestehende und bereits installierte Absperrhähne. Die Montage ist von der Betätigungsseite des Absperrhahns zugänglich, so dass eine seitliche Montage, die meist durch weitere Rohrleitungen und Dämmungen erschwert ist, vermieden werden kann. Außerdem ist die Bauweise sehr kompakt und baut in der Höhe kaum auf.

Die Schraubmittel können in bevorzugter Weise mindestens zwei Innengewinde im Flanschring, mindestens zwei jeweils einen Absatz aufweisende Sacklöcher im Einsatz und mindestens zwei Gewindestifte aufweisen. Die Gewindestifte werden beim Einschrauben axial bewegt und stützen sich ab einer vorgegebenen Einschraubtiefe jeweils an einem der Absätze im Einsatz ab. Durch Anziehen der Schraubmittel wird dadurch der Einsatz axial gegenüber dem Flanschring bewegt und somit eine zusammenziehende Kraft auf den Einsatz erzeugt, die das beschrieben Andrücken des Einsatzes an den Absperrhahn hervorruft.

Dabei ist es weiter vorteilhaft, wenn die Innengewinde als seitlich offene Teilgewinde und die Sacklöcher als seitlich offene Teildurchgänge im Bereich der konischen Anlageflächen ausgebildet sind. Die Teilgewinde und die Sacklöcher sind zueinander ausgerichtet, sodass der Flanschring achsensymmetrisch zur Durchflussrichtung steht. Die Sacklöcher können beim Verpressen des Einsatzes auf einen geringeren Durchmesser des Einsatzes zueinander verschoben werden, ohne dabei ein weiteres Einschrauben des Schraubmittels zu blockieren.

Ziel ist es, dass der Flanschring eine definierte Position zum Kugelhahn haben soll, wie es auch Kugelhähne mit einem integralen Flansch haben. Der Ausgleich des Durchmessers ist nur minimal, daher reicht es aus, wenn das Sackloch ist geringfügig größer gewählt wird. Die Anordnung mit Teilgewinde und Teilsacklöchern hat neben der Ausrichtung den Vorteil, dass der Aufbau sehr kompakt zum Aufbringen der Kraft und anschließende Verschieben des Einsatzes gestaltet ist.

Für ein Lösen der Anordnung des Adapters ist es vorteilhaft, wenn der Einsatz wieder aus dem Flanschring herausgedrückt werden kann. Dazu weist der Einsatz in bevorzugter Weise ein Innengewinde zur Aufnahme eines Gewindestiftes auf und der Flanschring weist ein zum Innengewinde korrespondierendes Sackloch auf. Beim Einschrauben des Gewindestiftes kommt das vordere Ende des Gewindestiftes mit dem Grund des Sackloches in Berührung und beim weiteren Eindrehen des Gewindestiftes entsteht eine Kraft, die den Einsatz aus dem Flanschring herausdrückt.

Wie schon bei den anderen Teilgewinden und Sacklöchern können auch das Innengewinde und das Sackloch seitlich offen im Bereich der konischen Anlageflächen ausgebildet sein und zueinander korrespondierende Positionen einnehmen. Diese Anordnung hat auch in diesem Fall den Vorteil, dass sich der Einsatz beim Ausdehnen auf einen größeren Durchmesser gegenüber dem Flanschring bewegen kann, ohne dass die beiden Teilöffnungen mit dem Gewindestift blockieren.

Weiterhin ist es bevorzugt, dass der Innenquerschnitt der Innenöffnung des Einsatzes radial nach außen gerichteten Ausnehmungen zur Aufnahme von am Absperrhahn außenseitig angeordneten Anschlagnocken aufweist. Somit wird zusätzlich zum Anpressen des Einsatzes an die Außenkontur des Absperrhahns eine weitere Verdrehsicherung erzeugt. Zudem wird der Einsatz und somit der gesamte Adapter relativ zum Absperrhahn ausgerichtet, so dass eine verbesserte Positionsgenauigkeit des Adapters und somit auch des Antriebsmittels relativ zum Absperrhahn gewährleistet werden kann.

Des Weiteren kann in vorteilhafter Weise der Innenquerschnitt der Innenöffnung des Einsatzes eine in axialer Richtung der aufzunehmenden Schaltwelle des Absperrhahns ausgebildete, insbesondere halbkreisförmige, Vertiefung mit zwei Anschlägen für die Drehbewegung des Vierkantadapters aufweisen und der Vierkantadapter kann einen viertelkreisförmigen radial vorstehenden Flansch aufweisen. Dadurch wird das Positionieren des Adapters und des Antriebsmittels weiter verbessert, eine Einstellung der beiden Endpositionen für einen geöffneten Absperrhahn und einen geschlossenen Absperrhahn ergibt sich durch die Montage selbst. Somit müssen an den Antriebsmitteln keine Anschläge eingestellt werden, da die Anschläge des Einsatzes und des Vierkantadapters durch die direkte Übertragung des Anschlages vom Absperrhahn genutzt werden.

Die oben aufgezeigte Aufgabe wird erfindungsgemäß durch ein System gelöst mit einem Adapter der zuvor beschriebenen Art und mit einem manuell betätigbaren Absperrhahn, wobei der Absperrhahn eine zu der Innenkontur des Einsatzes des Flansches korrespondierenden Außenkontur aufweist.

Die zuvor für den Adapter aufgezeigten Merkmale und Vorteile gelten gleichermaßen auch für das erfindungsgemäße System.

Im Folgenden wird die Erfindung anhand von Ausführungsbeispielen mit Bezug auf die Zeichnung erläutert. In der Zeichnung zeigen
- Fig. 1 - 3: einen Flanschring eines erfindungsgemäßen Adapters in verschiedenen Ansichten,
- Fig. 4 - 6: einen Einsatz eines erfindungsgemäßen Adapters in verschiedenen Ansichten,
- Fig. 7 - 9: einen Vierkantadapter eines erfindungsgemäßen Adapters in verschiedenen Ansichten,
- Fig. 10 - 11: eine Schraube zur Befestigung des Vierkantadapters nach Fig. 7 - 9 in verschiedenen Ansichten,
- Fig. 12 - 14: einen vormontierten Adapter auf einem Kugelhahn in verschiedenen Ansichten,
- Fig. 15 - 16: einen am Kugelhahn befestigten Adapter in verschiedenen Ansichten und
- Fig. 17: einen für ein Lösen vorbreiteten Adapter.

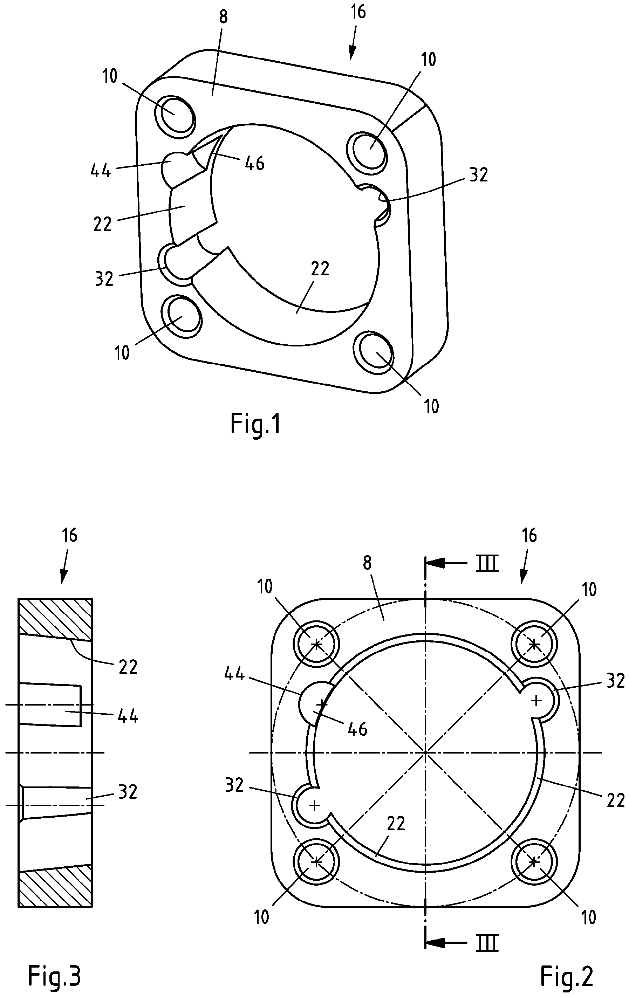

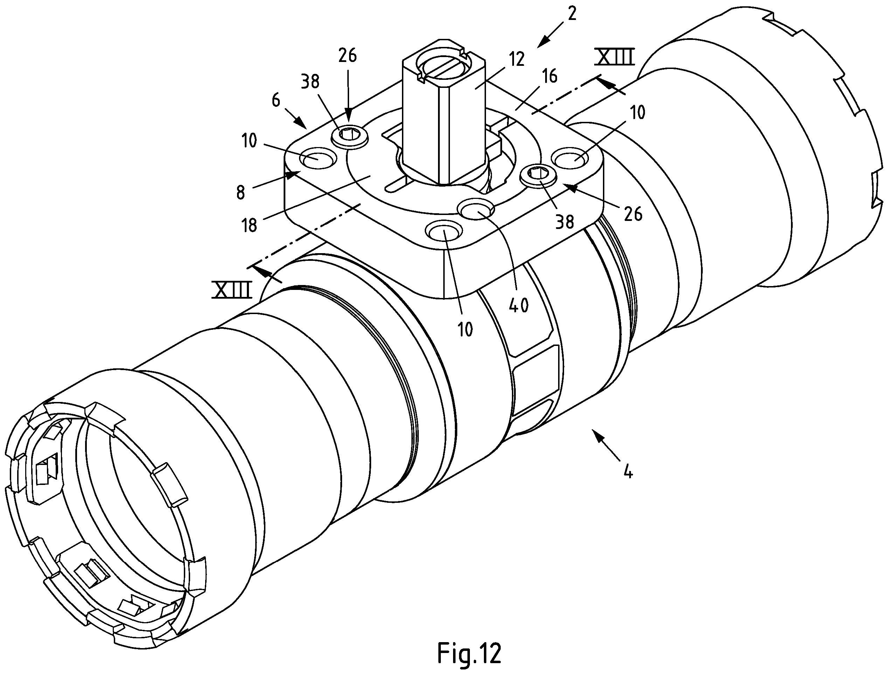

Nachfolgend wird ein erfindungsgemäßes Ausführungsbeispiel eines Adapter 2 zum Anschließen eines Antriebsmittels (nicht dargestellt) an einen manuell betätigbaren Absperrhahn, der vorliegend als Kugelhahn 4 ausgebildet ist, im Detail beschrieben. Die Fig. 1 bis 11 zeigen dabei einzelne Komponenten des Adapters 2, während die Fig. 12 bis 17 den Adapter 2 in verschiedenen Stadien der Montage mit einem Kugelhahn 4 zeigen.

Die Fig. 12 bis 14 zeigen den Adapter 2 in einer vormontierten Position auf einem Kugelhahn 4, der mit beidseitig angeschlossenen an sich bekannten Fittings verbunden ist. Der Adapter 2 weist einen Flansch 6 auf, an dem ein Befestigungsabschnitt 8 mit vier Bohrungen 10 zum Befestigen des Antriebsmittels. Die Bohrungen 10 sind derart angeordnet, dass verschiedene Antriebsmittel daran befestigt werden können, insbesondere sind die Bohrungen 10 entsprechend der Norm DIN ISO 5211 angeordnet. Die Bohrungen 10 weisen entweder ein Innengewinde auf oder sind als durchgängige Bohrungen ausgebildet.

Des Weiteren ist ein Vierkantadapter 12 zum Übertragen eines Drehmomentes von dem Antriebsmittel auf die Schaltwelle 14 des Kugelhahns 4 vorgesehen. Dabei sind die Abmessungen des Vierkantadapters 12 nach DIN EN ISO 5211 ausgebildet.

Der Flansch 6 weist einen Flanschring 16 und einen im Flanschring 16 angeordneten Einsatz 18 auf, wobei der Flanschring 16 und der Einsatz 18 entlang der Achse Ader Schaltwelle 14 angeordnet sind.

Weiterhin weist der Einsatz 18 eine Innenöffnung 20 mit einem an eine Außenabmessung des Kugelhahns 4 angepassten Innenquerschnitt auf, wobei der Einsatz 18 als in azimutaler Richtung offener und radial zusammendrückbarer Ring ausgebildet ist.

Der Flanschring 16 und der Einsatz 18 weisen zueinander korrespondierende konische Anlageflächen 22 und 24 auf und Schraubmittel 26 zum Verspannen des Flanschrings 16 und des Einsatzes 18 in axialer Richtung zueinander zur Reduzierung des Innendurchmessers der Innenöffnung 20 sind vorgesehen.

Durch ein Anziehen der Schraubmittel 26 wird der Einsatz 18 in den Flanschring 16 hineingezogen und umfangseitig zusammengedrückt. Dadurch wird der Flansch 6 insgesamt gegen eine Bewegung relativ zum Kugelhahn gesichert.

Fig. 1 - 3 zeigen den Flanschring 16 im Detail mit den Bohrungen 10 des Befestigungsabschnitts 8 und die konisch ausgebildete Anlagefläche 22.

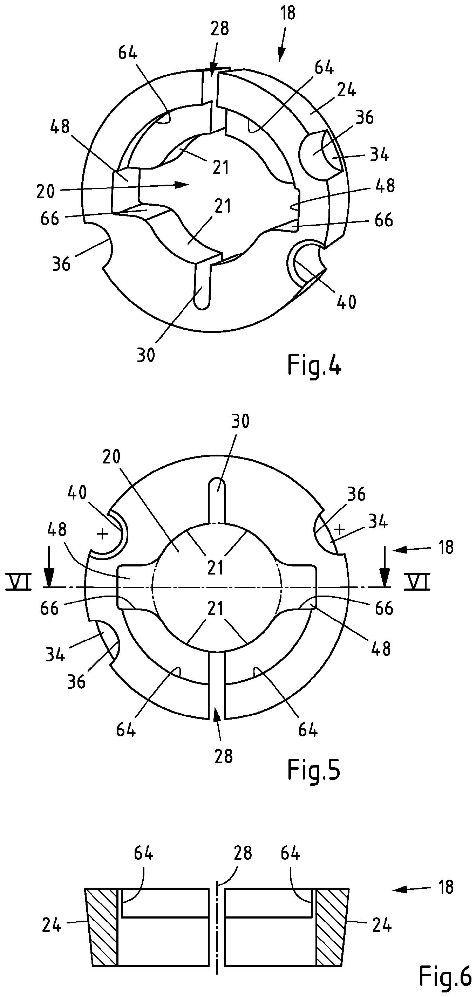

Fig. 4 - 6 zeigen den Einsatz 18 im Detail mit der Innenöffnung 20 mit den umfangseitigen Innenflächen 21 und der konisch ausgebildeten Anlagefläche 24. Der Einsatz 18 weist eine Öffnung 28 auf, zu der gegenüberliegend eine Vertiefung 30 ausgebildet ist. Somit ist der Einsatz 18 als in azimutaler Richtung (Umfangsrichtung) offener und radial zusammendrückbarer Ring ausgebildet.

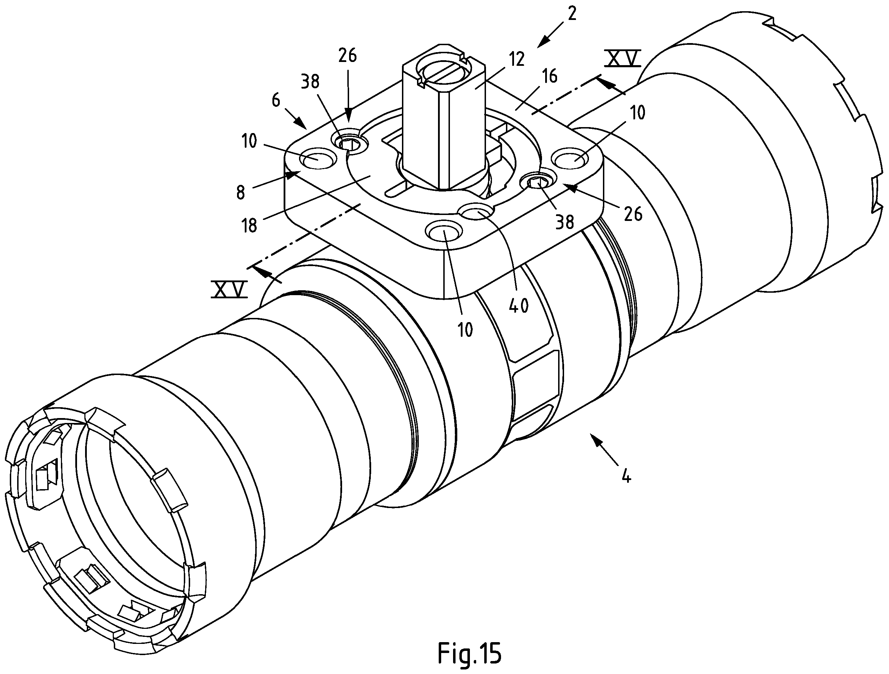

Für das Herstellen der festen Verbindung des Flanschrings 16 und des Einsatzes 18 auf der Außenabmessung des Kugelhahns 4 weisen die Schraubmittel 26 zwei Innengewinde 32 im Flanschring 16, zwei jeweils einen Absatz 34 aufweisende Sacklöcher 36 im Einsatz 18 und zwei Gewindestifte 38, bevorzugt mit einem Innensechskant, auf, die in den Fig. 12 und 15 zu erkennen sind. Die Innengewinde 32 sind dabei als seitlich offene Teilgewinde und die Sacklöcher 36 als seitlich offene Teildurchgänge im Bereich der konischen Anlageflächen 22 und 24 ausgebildet.

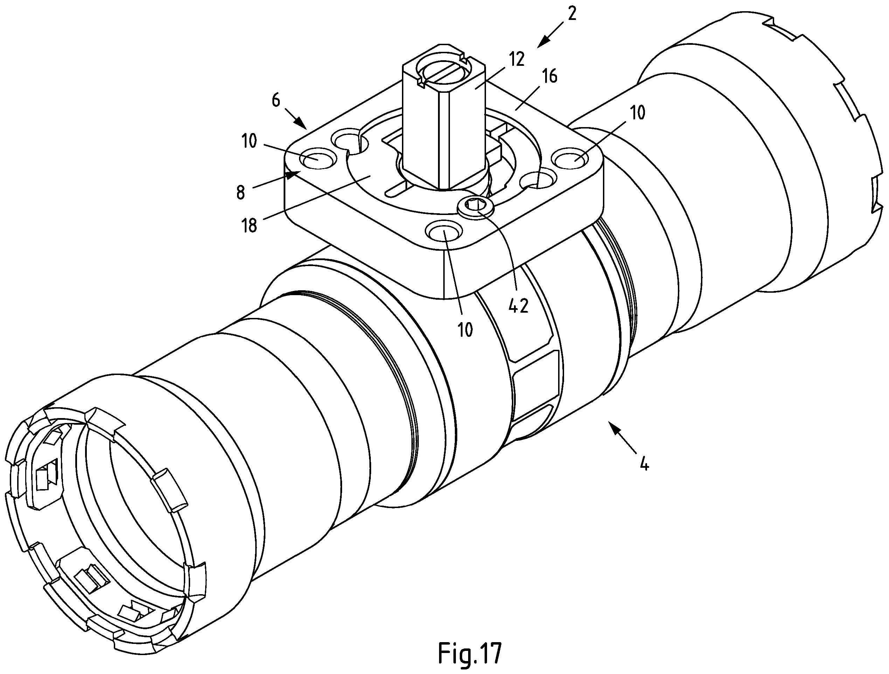

Weiterhin weist der Einsatz 18 ein Innengewinde 40 zur Aufnahme eines Gewindestiftes 42 auf, der in Fig. 17 dargestellt ist. Dementsprechend weist der Flanschring 16 ein zum Innengewinde 40 korrespondierendes Sackloch 44 auf, an dessen Grundfläche 46 sich der Gewindestift 42 abstützt, wenn der Gewindestift ausreichend weit in das Innengewinde 40 eingeschraubt ist.

Auch hier sind das Innengewinde 40 und das Sackloch 42 seitlich offen im Bereich der konischen Anlageflächen 22 und 24 ausgebildet.

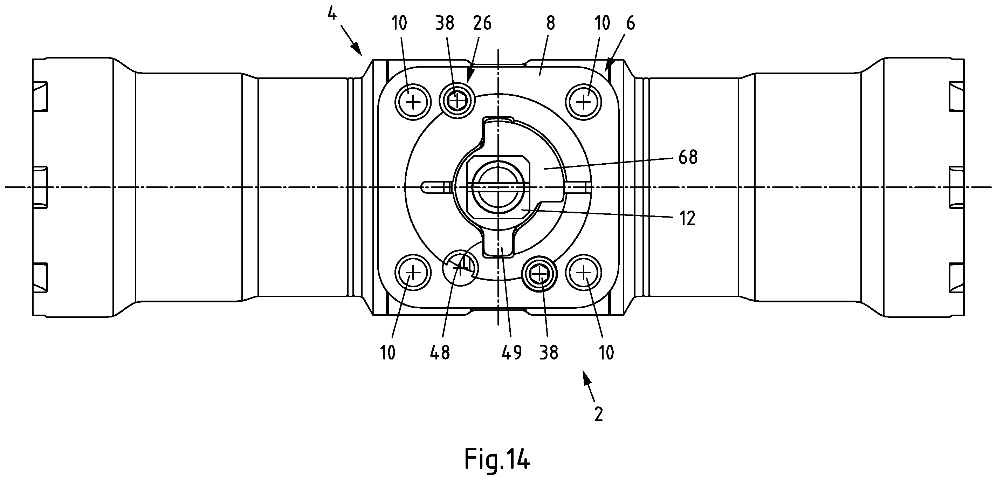

Der Innenquerschnitt der Innenöffnung 20 des Einsatzes 18 weist weiterhin radial nach außen gerichteten Ausnehmungen 48 zur Aufnahme von am Kugelhahn 4 außenseitig angeordneten Anschlagnocken 49 auf, wie in Fig. 14 in einer Draufsicht zu erkennen ist. Dadurch kann der Einsatz 18 verdrehsicher am Kugelhahn 4 angeordnet und befestigt werden.

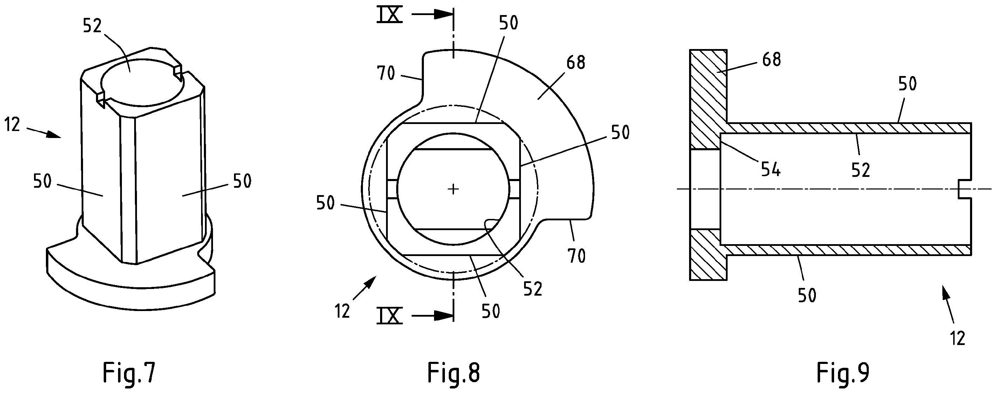

Der Vierkantadapter 12 ist gemäß der Fig. 7 bis 9 ausgebildet und weist vier Seitenflächen 50 auf, die rechtwinklig zueinander ausgerichtet sind. Die Abmessungen des Vierkantadapters 12 sind dabei nach DIN EN ISO 5211 gewählt. Somit kann ein Antriebsmittel mit einer entsprechenden vierkantigen Aufnahme mit dem Vierkantadapter verbunden werden. Im Inneren des Vierkantadapters 12 ist eine runde Durchgangsöffnung 52 ausgebildet, um den Vierkantadapter 12 auf die Schaltwelle 14 des Kugelhahns 4 aufzusetzen. Am der Schaltwelle 14 zugewandten Ende des Vierkantadapters 12 ist ein umlaufender und nach innen gerichteter Absatz 56 ausgebildet, dessen Innenquerschnitt an die äußeren Abmessungen der Schaltwelle 14 angepasst ist.

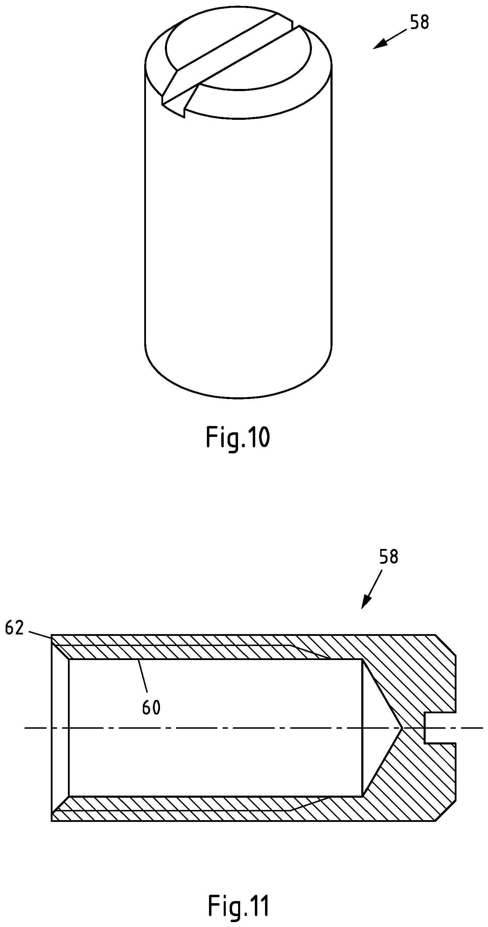

Des Weiteren ist eine Schraube 58 gemäß der Fig. 10 und 11 vorgesehen, die hülsenförmig ausgebildet ist und ein Innengewinde 60 aufweist, das mit dem Außengewinde der Schaltwelle 14 zusammenwirkt.

Bei Einschrauben der Schraube 58 kommt das vordere Ende 62 mit dem Absatz 54 des Vierkantadapters 12 in Kontakt und fixiert den Vierkantadapter 12 gegenüber der Schaltwelle 14. Dadurch wird der Adapter 2 in axialer Richtung gegenüber dem Kugelhahn 4 gesichert.

Eine weitere besondere Ausgestaltung des Einsatzes 18 besteht darin, dass der Innenquerschnitt der Innenöffnung 20 des Einsatzes 18 eine in axialer Richtung der aufzunehmenden Schaltwelle 14 des Kugelhahns 4 ausgebildete, insbesondere halbkreisförmige, Vertiefung 64 mit zwei Anschlägen 66 für die Drehbewegung des Vierkantadapters 12 aufweist und dass der Vierkantadapter 12 einen viertelkreisförmigen radial vorstehenden Flansch 68 mit zwei Anschlägen 70 aufweist, wie insbesondere in den Fig. 7 bis 9 gezeigt ist.

Somit wird ein System mit einem Adapter 2 gemäß der Fig. 1 bis 11 und mit einem manuell betätigbaren Absperrhahn bzw. Kugelhahn 4 gebildet, wobei der Kugelhahn 4 eine zu der Innenkontur des Einsatzes 18 des Flansches 6 korrespondierenden Außenkontur aufweist.

In den Fig. 12 bis 17 ist die Montage und die Demontage des Adapters 2 dargestellt.

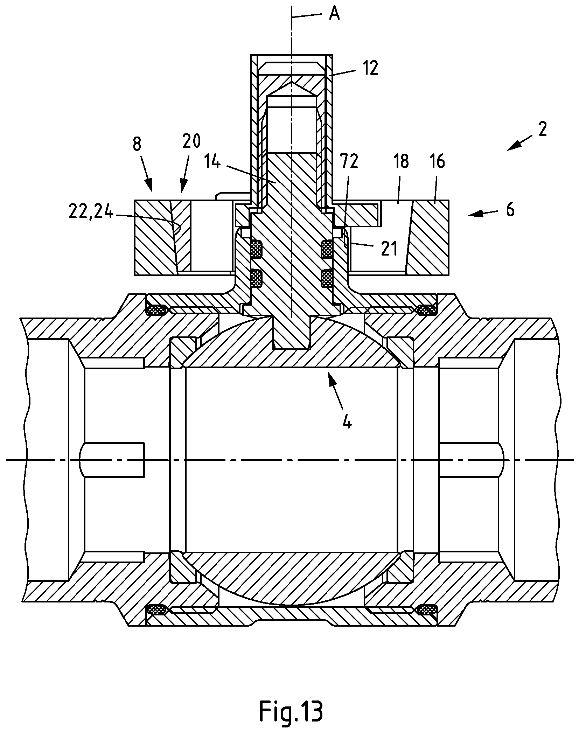

Gemäß der Fig. 12 bis 14 wird der Adapter 2 auf der Schaltwelle 14 des Kugelhahns 4 positioniert, gegebenenfalls manuell festgehalten. Die Gewindeschrauben 38 sind zum Teil eingeschraubt und stehen ein wenig nach oben vor. Im Querschnitt in Fig. 13 ist zu erkennen, dass die Innenfläche 21 des Einsatzes 18 einen geringen radialen Abstand zur Außenseite 72 des Kugelhahns 4 aufweist. Daher kann der vormontierte Adapter 2 auf den Kugelhahn 4 aufgesetzt und für eine Positionierung bewegt werden.

Für ein Befestigen des Adapters 2 werden die Gewindeschrauben 38 gleichmäßig, gegebenenfalls wechselseitig angezogen. Die Gewindeschrauben 38 drehen dabei in den Innengewinden 32 des Flanschrings 16 und drücken den Einsatz 18 durch Anlage an den Absätzen 34 der Sacklöcher 36

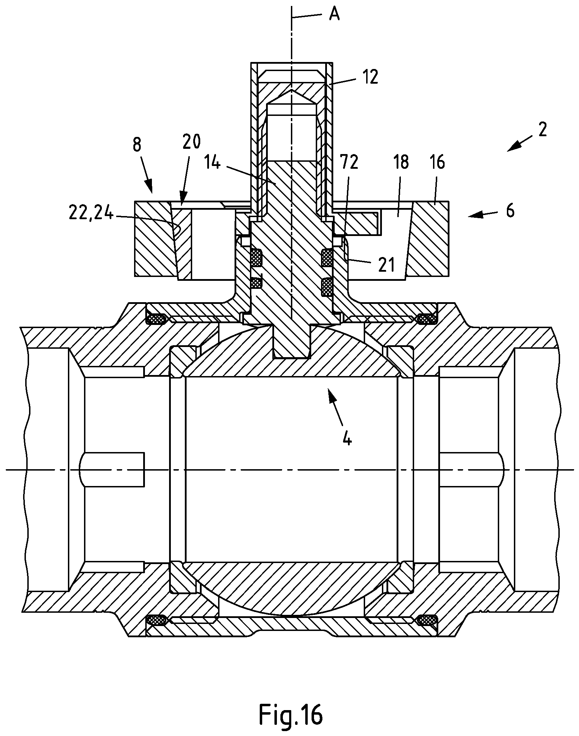

Dadurch wird - wie beschrieben - der Einsatz 18 in den Flanschring 16 hineingezogen. Durch die konischen Anlageflächen 22 und 24 wird der Einsatz 18 zusammengedrückt und der Innendurchmesser der Innenflächen 21 verringert sich. Dadurch wird die Innenöffnung 20 an die Außenseite 72 des Kugelhahns 4 angepresst. Dieser Zustand ist in den Fig. 15 und 16 dargestellt. Somit kommt es zu einer Selbsthaltung des Adapters 2 auf dem Kugelhahn 4. Die weitere Montage des Vierkantadapters 12 mit der Schraube 58 kann danach erfolgen, um den befestigten Adapter 2 für einen Anschluss des Antriebsmittels vorzubereiten.

Fig. 17 zeigt den für ein Lösen des Adapters 2 vorbereiteten Zustand. Die Gewindeschraube 42 ist teilweise in das Innengewinde 40 und das Sackloch 44 eingeschraubt. Zum Lösen des Adapters wird die Gewindeschraube 42 angezogen und stützt sich an der Grundfläche 46 des Sacklochs 44 ab, so dass der Einsatz 18 aus dem Flanschring 16 herausgezogen und gelöst wird. Danach kann der abgelöste Adapter 2 von dem Kugelhahn 4 entfernt werden.

## Patentansprüche

1. Adapter zum Anschließen eines Antriebsmittels an einen manuell betätigbaren Absperrhahn, insbesondere einen Kugelhahn,
- mit einem Flansch (6),
- mit einem am Flansch (6) ausgebildeten Befestigungsabschnitt (8) zum Befestigen des Antriebsmittels und
- mit einem Vierkantadapter (12) zum Übertragen eines Drehmomentes von dem Antriebsmittel auf die Schaltwelle des Absperrhahns,
**dadurch gekennzeichnet,**
- **dass** der Flansch (6) einen Flanschring (16) und einen im Flanschring (16) angeordneten Einsatz (18) aufweist,
- **dass** der Einsatz (18) eine Innenöffnung (20) mit einem an eine Außenabmessung des Absperrhahns angepassten Innenquerschnitt aufweist,
- **dass** der Einsatz (18) als in azimutaler Richtung offener und radial zusammendrückbarer Ring ausgebildet ist,
- **dass** der Flanschring (16) und der Einsatz (18) zueinander korrespondierende konische Anlageflächen (22, 24) aufweisen und
- **dass** Schraubmittel (26) zum Verspannen des Flanschringes (16) und des Einsatzes (18) in axialer Richtung zueinander zur Reduzierung des Innendurchmessers der Innenöffnung (20) vorgesehen sind.

2. Adapter nach Anspruch 1,
**dadurch gekennzeichnet,**
**dass** die Schraubmittel (26) mindestens zwei Innengewinde (32) im Flanschring (16), mindestens zwei jeweils einen Absatz (34) aufweisende Sacklöcher (36) im Einsatz (18) und mindestens zwei Gewindestifte (38) aufweisen.

3. Adapter nach Anspruch 2,
**dadurch gekennzeichnet,**
- **dass** die Innengewinde (32) als seitlich offene Teilgewinde und die Sacklöcher (36) als seitlich offene Teildurchgänge im Bereich der konischen Anlageflächen (22, 24) ausgebildet sind.

4. Adapter nach einem der Ansprüche 1 bis 3,
**dadurch gekennzeichnet,**
- **dass** der Einsatz (18) ein Innengewinde (40) zur Aufnahme eines Gewindestiftes (42) aufweist und
- **dass** der Flanschring (16) ein zum Innengewinde (40) korrespondierendes Sackloch (44) aufweist.

5. Adapter nach Anspruch 4,
**dadurch gekennzeichnet,**
**dass** das Innengewinde (40) und das Sackloch (44) seitlich offen im Bereich der konischen Anlageflächen (22, 24) ausgebildet sind.

6. Adapter nach einem der Ansprüche 1 bis 5,
**dadurch gekennzeichnet,**
**dass** der Innenquerschnitt der Innenöffnung (20) des Einsatzes (18) radial nach außen gerichteten Ausnehmungen (48) zur Aufnahme von am Absperrhahn außenseitig angeordneten Anschlagnocken aufweist.

7. Adapter nach einem der Ansprüche 1 bis 6,
**dadurch gekennzeichnet,**
- **dass** der Innenquerschnitt der Innenöffnung (20) des Einsatzes (18) eine in axialer Richtung der aufzunehmenden Schaltwelle des Absperrhahns ausgebildete, insbesondere halbkreisförmige, Vertiefung (64) mit zwei Anschlägen (66) für die Drehbewegung des Vierkantadapters (12) aufweist und
- **dass** der Vierkantadapter (12) einen viertelkreisförmigen radial vorstehenden Flansch (68) aufweist.

8. System
- mit einem Adapter (2) nach einem der Ansprüche 1 bis 7 und
- mit einem manuell betätigbaren Absperrhahn (4),
- wobei der Absperrhahn (4) eine zu der Innenkontur des Einsatzes (18) des Flansches (6) korrespondierenden Außenkontur aufweist.
